# EUROPEAN PATENT SPECIFICATION

(11) **EP 0 251 235 B1**
(45) Date of publication and mention of the grant of the patent: **19.04.1995**
(21) Application number: 87109196.3
(22) Date of filing: 26.06.1987
(51) Int. Cl.: G06F 13/38, G07F 7/10

(54) **operator interface servicing module**
Dienstmodul für Bedienerschnittstelle
Module de service pour interface opérateur

(30) Priority: 30.06.1986 US 880420
(43) Date of publication of application: 07.01.1988
(73) Proprietor: WANG LABORATORIES INC., Lowell, MA 01851 (US)
(72) Inventor: Horton, Philip, A., Bedford, MA. 03102 (US); Russell, Donald L., Chelmsford, MA. 01824 (US)
(74) Representative: Behrens, Dieter, Dr.-Ing.

(56) References cited:
- EP-A- 0 096 599
- EP-A- 0 190 733
- EP-A- 0 207 320
- GB-A- 2 165 978
- US-A- 4 680 732
- IBM TECHNICAL DISCLOSURE BULLETIN, vol. 16, no. 8, January 1974, pages 2601-2602, New York, US; R.B. FREEMAN et al.: "Channel type identification for an intelligent control unit"
- IBM TECHNICAL DISCLOSURE BULLETIN, vol. 28, no. 8, January 1986, pages 3358-3359, New York, US: "Keyboard port attachment"

## Description

An operator of a computerized workstation ordinarily interfaces with several devices or peripherals. Depending on circumstances, these might include a keyboard, a visual monitor, a microphone, an identification reader, a mouse, or other. All of these operator interfacing devices must be within reach of or in immediate view of the operator. Typically they are all on or beside the operator's desk. The host computer servicing these operator interfacing devices may, however, be located at some distance from the operator--perhaps a few feet, perhaps much farther. It has been the practice to provide communication between the host computer and the peripherals interfaced by the operator by providing the host computer with an i/o controller for each operator interfacing device with a separate communication link from the i/o to the associated device.

A peripheral keyboard unit is known (EP-A-0 055 560) which is to be located some distance from a host computer and connected thereto by a serial data link. The host CPU sends polling data to the keyboard controller microprocessor, and the microprocessor thereafter controls keyboard scanning and serial transmission of keyboard data to the host CPU via the serial data link. Communication can only be established between the keyboard and the host computer. No access control to the host computer from the keyboard is discussed.

In a computer system including a host computer and a plurality of operator interface peripheral devices, data transfer link for transferring data to and from the host computer and an operator interface service module is known (US patent no. 4,680,732) in which the operator interface service module is constituted by a combination of a terminal and an interface controller and selects a peripheral device to be utilised, prescribes the operating mode and establishes the timing and synchronisation of the data transfer. The peripheral devices comprise a printer, magnetic stripe reader, and keyboard, interpreting means and directing means responsive to the interpreting means and direct signals from the host computer to the one of the peripheral devices for which it is intended. The constitution of a data link is not disclosed.

According to the present invention, an operator interface servicing module placed at the operator station is connected by a serial data transfer link to a single i/o at host computer and provides integrated handling of all communications between the host computer and a plurality of interfacing devices of a single operator. The signals from the host computer include code sequences indicating which of the several interfacing devices a transmission is intended for. The servicing module monitors signals from the host, detects and interprets the codes, and processes and forwards signals received from the host to the designated interfacing device or takes other appropriate action. The interface servicing module also controls the access of the several interfacing devices to the communication link with the host computer to establish priority and preclude interference between the devices.

The interface servicing module is advantageously built around a microcomputer on a chip having a processor, serial i/o controllers, and a memory for storing program and for scratch pad work. This arrangement provides great flexibility and economy in system configuration since different combinations of operator interfacing devices can be accommodated by programmatic changes in the host computer and the module with uniform hardware. Economies are also realized by employing only one host i/o controller and a single transmission link between the host computer and the operator station.

More particularly, an operator interface servicing module may be used to provide integrated handling of communications between a host computer on the one hand and a keyboard and an authorization card receiver as described more fully below.

### Brief description of the drawing

Figure 1 shows in block diagram form a computer system employing an operator interface servicing module according to the invention.

Figure 2 shows in diagramatic form the operator interface servicing module, the authorization card receiver, and authorization card of Fig. 1.

Figure 3 shows a timing diagram for certain operations of the operator interface servicing module of Fig 1.

### Detailed description

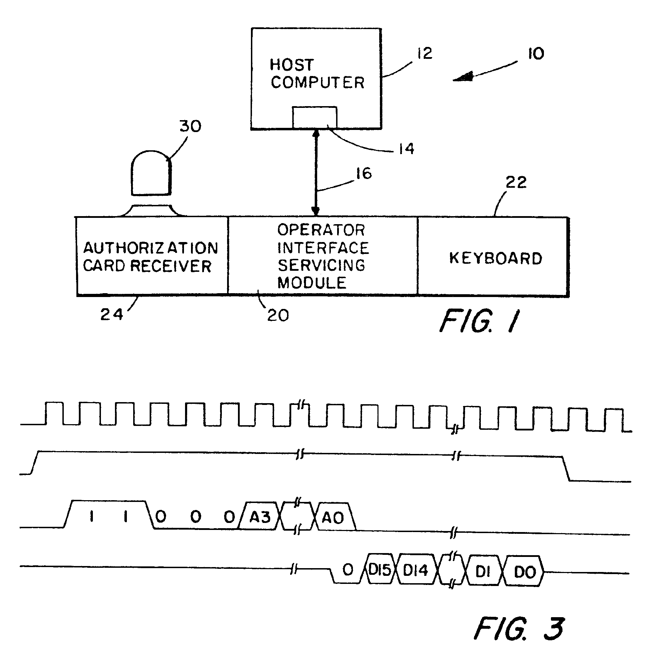

As shown particularly in Fig 1, computer system 10 employing the invention has a host computer 12, keyboard 22, and authorization card receiver 24 for receiving authorization cards from operators to verify the level of authorization of an operator in accessing the services and information of the host computer. An authorization card 30 is shown in position to be inserted in receiver 24.

To be convenient to an operator, keyboard 22 and card receiver 24 must be within arms length of the operator, but it is often convenient or necessary to place host computer 12 at some distance from the operator. Operator interface servicing module 20 is placed together with card receiver 24 and the keyboard 22 near the operator, and the servicing module, the keyboard and the card holder may be attached physically together to be moved as a single structure.

Host computer 12 has an i/o controller 14 connected by bidirectional serial data transfer link 16 with operator interface servicing module 20. Link 16 may conveniently use two coax cables for the transmission medium, but other mediums including optical may also be employed.

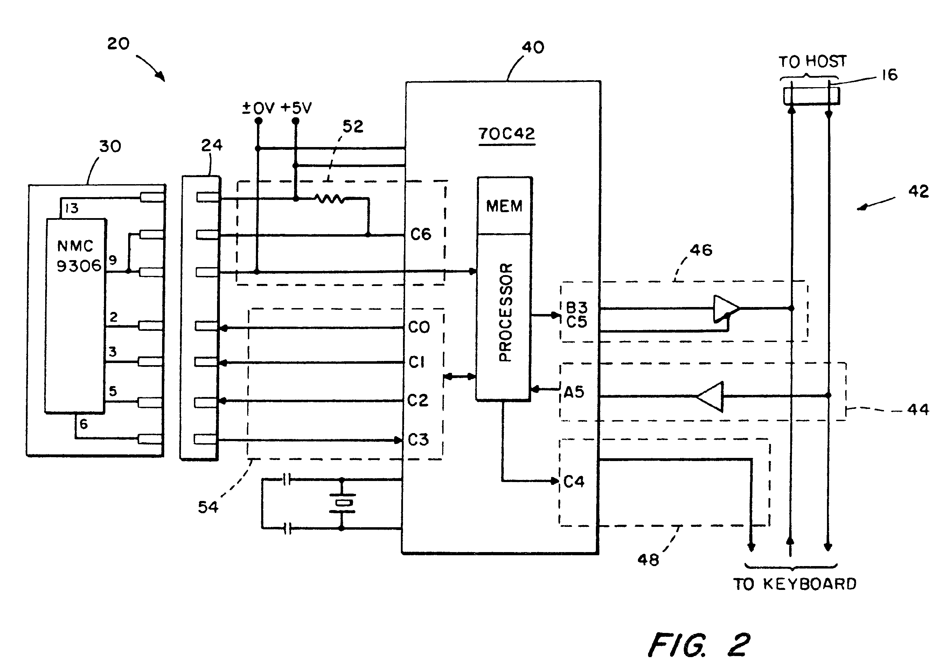

Referring particularly to Fig 2, servicing module 20 is built around a microcomputer chip 40. A suitable chip is commercially available as type 70C42. This chip has a processor 50, i/o controllers, 4K of ROM memory and 256K of RAM memory for program storage and scratch pad.

Servicing module 20 includes link connecting means 42 for connecting to link 16, circuitry 44 connecting link 16 to microcomputer 40, circuitry connecting output of microcomputer 40 to link 16, and circuitry 48 connecting a control output of microcomputer 50 to keyboard 22. Servicing module 20 also includes circuitry 52 connecting a sensing signal from card receiver 24 to microcomputer 40, and circuitry 54 carrying activation, query and response signals between card receiver 24 and microcomputer 50.

Authorization card 30, also shown in Fig 2, includes a read-out device of conventional type mounted on a card with electrical connectors for insertion in card receiver 24. The card is organized with 16 stored bits at each of 16 addresses.

The operation of the system is as follows. An operator wishing to use the services of the host computer inserts his authorization card into the card holder. Upon insertion of the card, circuitry 52 will cause the voltage at terminal C6 to drop, and the microcomputer will respond to this by emitting 10 formatted bytes of hex 86 on circuitry 46 which will be sent over link 16 to the host computer to indicate that a card is in place. (Bytes are formatted as a start bit, 8 data bits, and 2 stop bits.) The microcomputer will then monitor the link through circuitry 44 looking for inquiry messages.

After receiving the hex 86 bytes, the host computer will ordinarily be programmed to send an inquiry message about the authorization level of the card holder by transmitting a two byte inquiry message of hex 70. This message will be picked up through monitoring circuitry 44 and interpreted as an inquiry message by the microcomputer.

Upon receiving the inquiry message the microcomputer raises the voltage on circuitry 48, which effects disconnection of the keyboard from the link. The microcomputer also institutes a dialog with the authorization card, employing terminals CO, C1, C2, and C3. The timing diagram for this shown in Fig 3. An activating signal is sent from CO, and a clock signal is started and continued from terminal C1. A 5-bit read command signal is sent from terminal C2 followed by a 4-bit address designating the storage bank to be returned. The 16 bits stored in the designated address are then returned to terminal C3. As the bits are returned they are stored in memory. The microcomputer is programmed to repeat the interrogation described 16 times going through 16 storage addresses of the card to assemble 256 bits of identifying data. The 256 bits are then exported over the link to the host computer through circuitry 46 in a format of four blocks of eight 8-bit bytes. Each block is preceded by a preamble byte of hex 88, and a 10 ms delay is placed between bytes. After this transmission, the microcomputer drops the voltage on circuitry 48 to effect reconnection of the keyboard to the link, and reverts to monitoring the link for inquiry messages.

The microcomputer also monitors the state of occupancy of card receiver 24 through circuitry 52. If the inserted card is withdrawn the voltage on terminal C6 will rise. When this occurs the microcomputer raises the voltage on terminal C4 to effect disconnection of the keyboard from the link to the host. The microcomputer also emits on terminal B3 a continuous stream of hex 84 bytes which is sent to the host as an indication of the removal of the card.

## Claims

1. A computer (10) system with a host computer (12), a keyboard (22) for entering data for said computer, an operator interface servicing module (20), and a serial data transfer link (16) for transferring data between the host computer and the operator interface servicing module (20), said keyboard (22) being positioned in close proximity to an operator's work position and said host computer (12) being at a substantial distance therefrom, said operator interface servicing module (20) including
link connecting means (42) for connecting said controller 14) to said data transfer link (16),
monitoring means (44) connected to said data transfer link for monitoring signals transmitted on said data transfer link by said host computer (12),
signal interpretation means (50) connected to said monitoring means (44) for interpreting said monitored signals form said host
characterized by
an authorization card receiver (24) for receiving an authorization card (30) indicating the identity of an operator of the keyboard,
said signal interpretation means identifying inquiry messages as to the status of the authorization card receiver,
keyboard control means (48) connected to said keyboard and responsive to said signal interpretation means for forwarding messages intended for the keyboard to the keyboard and for interrupting connection of the keyboard to said data transfer link upon receiving and while processing inquiry messages,
occupancy sensing means (52) connected to and responsive to said card receiver for sensing and transmitting to said host over said link a signal indicative of the occupancy state of the card receiver,
eliciting means (54) connected to said card receiver and responsive to said signal interpreting means (50) finding an inquiry message from said host for eliciting an identifying sequence of signals from an identifying card in said card receiver, and
transmitting means (46) for emitting on the data transfer link via said link connecting means signals derived from the identifying sequence of signals.

2. The computer system (10) of claim 1, further including a visual monitor positioned in close proximity to an operator's work position, wherein said operator interface servicing module (20) and said authorization card receiver (24) controls the access of said visual monitor to said host computer (12).

3. The computer system (10) of claim 1, further including a cursor control device positioned in close proximity to an operator's work position, wherein said operator interface servicing module and said authorization card receiver (24) controls the access of said device to said host computer (12).

4. The computer system (10) of claim 1 further including a microphone positioned in close proximity to an operator's work position, wherein said operator interface servicing module (20) and said authorization card receiver (24) controls the access of said microphone to said host computer (12).

5. The computer system (10) of claim 1 wherein said operator interface servicing module (20) is implemented as a single integrated circuit.

6. The computer system (10) of claim 1 wherein said keyboard (22), authorization card receiver (24), and operator interface servicing module (20) are attached together to be moved as a single structure.

7. The computer system (10) of claim 1 wherein said operator interface servicing module (20) additionally controls and manages communications between said host computer (12) and multiple peripheral devices (22, 24) by directing the proper signals from the host to the proper peripheral and sequencing communications from the peripherals to said host to avoid access conflicts.

## Patentansprüche

1. Computersystem (10) mit einem Verarbeitungscomputer (12), einer Tastatur (22) zum Eingeben von Daten für den Computer, einem Benutzerschnittstellen-Dienstmodul (20) und einer seriellen Datenübertragungsleitung (16) zum Übertragen von Daten zwischen dem Verarbeitungscomputer und dem Benutzerschnittstellen-Dienstmodul (20), wobei die Tastatur (22) nahe am Arbeitsplatz eines Benutzers angeordnet ist und der Verarbeitungscomputer (12) mit einem wesentlichen Abstand davon angeordnet ist, und wobei das Benutzerschnittstellen-Dienstmodul (20) aufweist:
Leitungsverbindungsmittel (42) zum Verbinden der Steuereinheit (14) mit der Datenübertragungsleitung (16),
Überwachungsmittel (44), die mit der Datenübertragungsleitung verbunden sind, um auf der Datenübertragungsleitung von dem Verarbeitungscomputer (12) übertragene Signale zu überwachen,
Signalauswertungsmittel (50), die mit den Überwachungsmitteln (44) verbunden sind, um die überwachten Signale von dem Verarbeitungsrechner auszuwerten,
gekennzeichnet durch
eine Berechtigungskartenaufnahme (24) zum Aufnehmen einer die Identität eines Tastaturbenutzers anzeigenden Berechtigungskarte (30),
wobei die Signalauswertungsmittel Anfragenachrichten bezüglich des Zustands der Berechtigungskartenaufnahme erkennen,
Tastatursteuermittel (48), die mit der Tastatur verbunden sind und auf die Signalauswertungsmittel ansprechen, um für die Tastatur bestimmte Nachrichten zur Tastatur weiterzuleiten, und um die Verbindung der Tastatur mit der Datenübertragungsleitung beim Empfangen und während des Verarbeitens von Anfragenachrichten zu unterbrechen, Belegungsabtastmittel (52), die mit der Kartenaufnahme verbunden sind und auf diese ansprechen, um ein Signal abzutasten und über die Leitung zu dem Verarbeitungscomputer zu übertragen, das den Belegungszustand der Kartenaufnahme anzeigt,
Auslesemittel (54) zum Auslesen einer Ausweissequenz von Signalen von einer Ausweiskarte in der Kartenaufnahme, die mit der Kartenaufnahme verbunden sind und darauf ansprechen, daß die Signalauswertungsmittel (50) eine Anfragenachricht des Verarbeitungcomputers erkennen, und
Übertragungsmittel (46) zum Aussenden von Signalen, die von der Ausweissequenz von Signalen abgeleitet sind, über die Leitungsverbindungsmittel auf die Datenübertragungsleitung.

2. Computersystem (10) nach Anspruch 1, gekennzeichnet durch einen nahe dem Arbeitsplatz eines Benutzers angeordneten Sichtmonitor, wobei das Benutzerschnittstellen-Dienstmodul (20) und die Berechtigungskartenaufnahme (24) den Zugriff des Sichtmonitors auf den Verarbeitungscomputer (12) steuern.

3. Computersystem (10) nach Anspruch 1, gekennzeichnet durch eine nahe dem Arbeitsplatz eines Benutzers angeordnete Cursor-Steuereinrichtung, wobei das Benutzerschnittstellen-Dienstmodul und die Berechtigungskartenaufnahme (24) den Zugriff der besagten Einrichtung auf den Verarbeitungscomputer (12) steuern.

4. Computersystem (10) nach Anspruch 1, gekennzeichnet durch ein nahe dem Arbeitsplatz eines Benutzers angeordnetes Mikrophon, wobei das Benutzerschnittstellen-Dienstmodul (20) und die Berechtigungskartenaufnahme (24) den Zugriff des Mikrophons auf den Verarbeitungscomputer (12) steuern.

5. Computersystem (10) nach Anspruch 1, wobei das Benutzerschnittstellen-Dienstmodul (20) als eine einzige integrierte Schaltung aufgebaut ist.

6. Computersystem (10) nach Anspruch 1, wobei die Tastatur (22), die Berechtigungskartenaufnahme (24) und das Benutzerschnittstellen-Dienstmodul (20) miteinander verbunden und als eine einzige Einheit bewegbar sind.

7. Computersystem (10) nach Anspruch 1, wobei das Benutzerschnittstellen-Dienstmodul (20) weiterhin den Nachrichtenverkehr zwischen dem Verarbeitungscomputer (12) und mehreren Peripheriegeräten (22, 24) steuert und verwaltet, indem es die passenden Signale vom Verarbeitungscomputer zu den passenden Peripheriegeräten lenkt und den Nachrichtenverkehr von den Peripheriegeräten zu dem Verarbeitungscomputer sequentialisiert, um Zugriffskonflikte zu vermeiden.

## Revendications

1. Un système informatique (10) comprenant un ordinateur central (12), un clavier (12) pour entrer des données destinées audit ordinateur, un module de service d'interface opérateur (20), et une liaison de transfert de données sérielles (16) pour transférer des données entre l'ordinateur central et le module de service d'interface opérateur (20), ledit clavier (22) étant situé à proximité immédiate d'une station de travail de l'opérateur et ledit ordinateur central (12) étant à une certaine distance de celle-ci, ledit module de service d'interface opérateur (20) comprenant
un moyen de liaison de connexion (42) pour connecter ledit contrôleur (14) à ladite liaison de transfert de données (16),
un moyen de surveillance (44) relié à ladite liaison de transfert de données pour surveiller les signaux transmis sur ladite liaison de transfert de données par ledit ordinateur central (12),
un moyen d'interprétation de signal (50) relié audit moyen de surveillance (44) pour interpréter lesdits signaux surveillés en provenance dudit ordinateur central,
caractérisé par
un récepteur de carte d'autorisation (24) pour recevoir une carte d'autorisation (30) indiquant l'identité d'un opérateur du clavier,
ledit moyen d'interprétation de signal identifiant des messages d'interrogation concernant l'état du récepteur de carte d'autorisation,
un moyen de gestion de clavier (48) relié audit clavier et répondant audit moyen d'interprétation de signal pour transmettre au clavier des messages destinés au clavier et pour interrompre la connexion du clavier à ladite liaison de transfert de données lors de la réception et pendant le traitement des messages d'interrogation,
un moyen de détection d'occupation (52) connecté et répondant audit récepteur de carte pour détecter et transmettre audit ordinateur central par ladite liaison un signal indiquant l'état d'occupation du récepteur de carte,
un moyen d'obtention (54) relié audit récepteur de carte et répondant audit moyen d'interprétation (50) trouvant un message d'interrogation en provenance dudit ordinateur central pour obtenir une séquence de signaux d'identification provenant d'une carte d'identification présente dans ledit récepteur de carte, et
un moyen transmetteur (46) pour émettre sur la liaison de transfert de données par l'intermédiaire dudit moyen de liaison de connexion des signaux dérivés de la séquence de signaux d'identification.

2. Système informatique (10) selon la revendication 1, comprenant en outre un moniteur de visualisation situé à proximité immédiate d'une station de travail d'un opérateur, dans lequel ledit module de service d'interface opérateur (20) et ledit récepteur de carte d'autorisation (24) commandent l'accès du moniteur de visualisation audit ordinateur central (12).

3. Système informatique (10) selon la revendication 1, comprenant en outre un dispositif de pilotage de curseur situé à proximité immédiate d'une station de travail d'un opérateur, dans lequel ledit module de service d'interface opérateur et ledit récepteur de carte d'autorisation (24) commandent l'accès dudit dispositif audit ordinateur central (12).

4. Système informatique (10) selon la revendication 1 comprenant en outre un microphone situé à proximité immédiate d'une station de travail d'un opérateur, dans lequel ledit module de service d'interface opérateur (20) et ledit récepteur de carte d'autorisation (24) commandent l'accès dudit microphone audit ordinateur central (12).

5. Système informatique (10) selon la revendication 1, dans lequel ledit module de service d'interface opérateur (20) est réalisé sous la forme d'un circuit intégré unique.

6. Système informatique (10) selon la revendication 1, dans lequel lesdits clavier (22), récepteur de carte d'autorisation (24), et module de service d'interface opérateur (20) sont solidarisés pour pouvoir être déplacés comme une structure unitaire.

7. Système informatique (10) selon la revendication 1, dans lequel ledit module de service d'interface opérateur (20) commande et gère de plus les communications entre ledit ordinateur central (12) et de multiples dispositifs périphériques (22, 24) en adressant les signaux adéquats provenant de l'ordinateur central au périphérique adéquat et en mettant en séquence les communications des périphériques audit ordinateur central pour éviter des conflits d'accès.
